(19)

Europäisches
Patentamt
European
Patent Office
Office européen
des brevets

(11) **EP 2 875 395 B1**

(12) **EUROPEAN PATENT SPECIFICATION**

(45) Date of publication and mention
of the grant of the patent:
**06.12.2017 Bulletin 2017/49**

(51) Int Cl.:
***F21Y 115/10*** *(2016.01)*     ***F21Y 113/13*** *(2016.01)*
***F21Y 105/10*** *(2016.01)*     ***F21V 7/00*** *(2006.01)*
***F21V 5/00*** *(2015.01)*       ***G02B 19/00*** *(2006.01)*
***F21V 5/04*** *(2006.01)*

(21) Application number: **13740260.8**

(22) Date of filing: **19.07.2013**

(86) International application number:
**PCT/EP2013/065365**

(87) International publication number:
**WO 2014/016227 (30.01.2014 Gazette 2014/05)**

(54) **LENS, LENS ARRAY AND ILLUMINATING DEVICE**

LINSE, LINSENANORDNUNG UND BELEUCHTUNGSVORRICHTUNG

LENTILLE, MOSAÏQUE DE LENTILLES ET DISPOSITIF D'ÉCLAIRAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.07.2012 CN 201210256944**

(43) Date of publication of application:
**27.05.2015 Bulletin 2015/22**

(73) Proprietor: **OSRAM GmbH
80807 München (DE)**

(72) Inventors:
• **LI, Aiai
Shenzhen
Guangdong 518053 (CN)**

• **HE, Yuanyuan
Shenzhen
Guangdong 518053 (CN)**
• **LU, Yuan
Shenzhen
Guangdong 518053 (CN)**
• **LUO, Yabin
Shenzhen
Guangdong 518053 (CN)**

(56) References cited:
**WO-A1-2012/080889    CN-A- 102 322 610
GB-A- 288 694         US-A1- 2008 310 159
US-A1- 2010 226 127   US-A1- 2012 007 130**

## Description

### Technical Field

The present invention relates to a lens, a lens array and an illuminating device comprising the lens or the lens array, and in particular, to a compact lens, lens array that can mix colors and an illuminating device comprising the lens or the lens array.

### Background Art

Recently, the changeable correlated color temperature (CCT) capability has become an additional requirement in various fields in need of illumination and has been used more and more. For instance, in an LED illuminating device, the correlated color temperature of the whole LED illuminating device is usually adjusted by integrating a plurality of LEDs having different correlated color temperatures and adjusting supply currents of part or all of the LEDs.

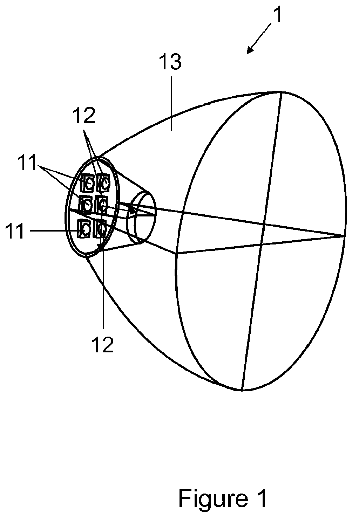

Fig. 1 shows an LED illuminating device 1 having a changeable correlated color temperature. As shown in Fig. 1, the LED illuminating device 1 comprises a first group of LEDs 11, a second group of LEDs 12 and a lens 13, the first group of LEDs 11 and the second group of LEDs 12 have different correlated color temperatures, and the first group of LEDs 11 and the second group of LEDs 12 as a whole are assigned to the lens 13, thus, light emitted from the first group of LEDs 11 and the second group of LEDs 12 emerges through the lens 13. The correlated color temperature of light emerging through the lens 13 can be adjusted by independently adjusting currents supplied to the first group of LEDs 11 and the second group of LEDs 12.

In the example as shown in Fig. 1, corresponding lens 13 is configured by taking all of the LEDs as a whole, and the configuration approximately follows the following formula (1):

$$\mathrm{n}_{in}^2 \, Area_{in} Sin^2(\theta_{in}) = n_{out}^2 \, Area_{out} Sin^2(\theta_{out}) \qquad (1)$$

where subscripts in and out represent "incidence" and "emergence", respectively, n is a refractive index, Area is an effective light-emitting area, and $\theta$ is a half angle of light distribution. It can be seen from formula (1) that in a situation that the corresponding lens 13 is configured by taking all the LEDs as a whole (at which time $Area_{in}$ is big), diameter and thickness of the lens 13 become very big, which is unfavorable for miniaturization of the illuminating device.

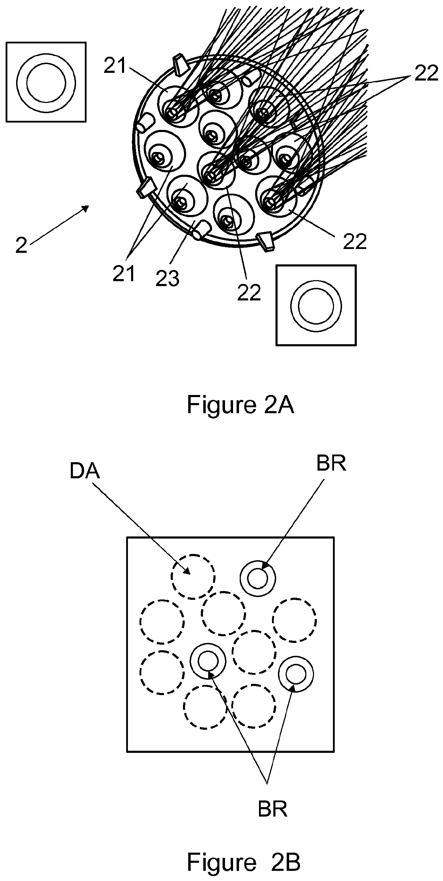

Fig. 2A shows another LED illuminating device 2 having changeable correlated color temperature. As shown in Fig. 2A, the LED illuminating device 2 comprises a first group of LEDs 21, a second group of LEDs 22 and a lens group 23, the first group of LEDs 21 and the second group of LEDs 22 having different correlated color temperatures, for instance, 6500K and 2700K, respectively. LEDs of the first group of LEDs 21 and the second group of LEDs 22 are assigned to lens of the lens group 23 one by one, thus, light emitted from respective LED of the first group of LEDs 21 and the second group of LEDs 22 emerges through one lens assigned thereto. The correlated color temperature of light emerging through the lens group 23 can be adjusted by independently adjusting currents supplied to the first group of LEDs 21 and the second group of LEDs 22. Fig. 2A shows a light-emitting situation, in which the first group of LEDs 21 are turned off and the second group of LEDs 22 are turned on, such that light emerges from those lenses assigned to the second group of LEDs 22.

Fig. 2B shows a plane graph of light emergent surface of the lens group 23 of the LED illuminating device 2 in the light-emitting situation as shown in Fig. 2A, wherein a plurality of regions DA encircled by dashed lines represent light emergent surface corresponding to lenses of the first group of LEDs 21, and a plurality of regions BR represent light emergent surface corresponding to lenses of the second group of LEDs 22. As shown in Fig. 2B, in this situation, as the first group of LEDs 21 are turned off, the light emergent surface corresponding to the lenses of the first group of LEDs 21 becomes dark, which will make customers think the dark LEDs of the LED illuminating device 2 are broken.

Moreover, in the LED illuminating device 2, if both the first group of LEDs 21 and the second group of LEDs 22 are turned on, there will be a chromatic aberration between the regions DA and the regions BR, which results in non-uniform light emitted from the LED illuminating device 2.

The earlier patent application US2010/0226127A1 discloses a light-mixing lens, which comprises two three-dimensional surfaces assigned to two light sources. However, it does not have partial cylindrical surfaces enclosing the three-dimensional surfaces respectively, nor any joining surfaces.

### Summary of the Invention

In order to solve the above problems, the present invention provides a lens that has a compact structure and is capable of uniformly mixing colors, a lens array comprising a plurality of lenses and an illuminating device comprising the lens or the lens array.

According to one embodiment of the present invention, provided is a lens, comprising a first surface and a second surface, wherein the first surface comprises: light incident surfaces, from which light enters the lens; and a total reflection surface, on which a part of light entering the lens is totally reflected. The second surface comprises a light emergent surface, wherein the light incident surfaces comprise a plurality of three-dimensional surfaces assigned to different light sources, a part of light from one light source can enter the lens from one three-dimensional surface assigned to the one light source, and the other part can enter the lens from one three-dimensional surface that is not assigned to the one light source.

In the present embodiment, the light incident surfaces are configured to comprise a plurality of three-dimensional surfaces assigned to different light sources, a part of light from one light source enters the lens from one three-dimensional surface assigned to the one light source, and the other part enters the lens from one three-dimensional surface that is not assigned to the one light source. Thus, the volume is reduced compared with the LED illuminating device 1 as shown in Fig. 1. In addition, even if a part of the light sources are turned off, light emitted from other light sources also can be incident on the lens from the three-dimensional surfaces assigned to the light sources turned off, thus, uniformly emitted light can be obtained, and customers will not think that the light sources turned off are broken. Further, the light incident surfaces further comprise: a plurality of partial cylindrical surfaces each partially enclosing one of the three-dimensional surfaces assigned thereto; first joining surfaces joining the plurality of partial cylindrical surfaces; and second joining surfaces joining the plurality of three-dimensional surfaces.

Further, the first surface can have a mirror-symmetric structure; moreover, the first surface can have a nonaxisymmetric structure.

Further, each three-dimensional surface of the plurality of three-dimensional surfaces is a rotationally symmetric surface. As a result, desired three-dimensional surfaces can be obtained by fitting a 2-dimensional array of data, thereby obtaining desired light distribution.

Further, a rotation axis of symmetry of respective three-dimensional surface is coincident with an optical axis of a light source assigned to the three-dimensional surface. Thus, light emitted from the light sources can be further uniformized.

Further, the light incident surfaces comprise two, three or four three-dimensional surfaces. In this situation, uniform light mixture can be obtained, and the structure of the lens is more compact, giving more prominence to the advantages of the present invention.

In the above, an angle of rotation of respective partial cylindrical surface is no less than 180°.

Therefore, more light emitted from the light sources can be incident on the lens from the cylindrical surfaces and is reflected by the total reflection surface, and then the light extraction efficiency is improved.

In the above, an axis of respective partial cylindrical sur face and a central axis of the lens form a predetermined angle and the axis of respective partial cylindrical surface at the side of the second surface is closer to the central axis of the lens than at the side of the first surface.

The predetermined angle can be equal to or less than 5°.

In this situation, demoulding can be easier when the lens is fabricated through injection molding, improving the yield.

Further, the total reflection surface comprises a plurality of partial conic surfaces each partially enclosing one three-dimensional surfaces assigned thereto.

An angle of rotation of respective partial conic surface is no less than 180°.

Thus, more light emitted from the light sources can be reflected by the total reflection surface, and then the light extraction efficiency is improved.

Further, the light incident surfaces form a light-source accommodating chamber and the total reflection surface forms a side surface of the lens. Thus, an illuminating device having a compact structure can be obtained.

According to another embodiment of the present invention, provided is a lens array comprising a plurality of the lenses as described above.

In this situation, a lens array having a compact structure and capable of uniformly mixing colors can be obtained.

According to another embodiment of the present invention, provided is an illuminating device comprising the lens or the lens array as described above, and a plurality of light sources, a plurality of three-dimensional surfaces of the lens assigned to different light sources.

In this situation, an illuminating device that has a compact structure and can uniformly mix colors can be obtained.

Further, luminance of at least part of the plurality of light sources is controllable independently.

Further, the plurality of light sources comprise a plurality of LEDs having light of different colors.

Thus, an illuminating device that has a compact structure and changeable correlated color temperature capability and can uniformly mix colors can be obtained.

**Brief Description of the Drawings**

Fig. 1 shows a conventional LED illuminating device having a changeable correlated color temperature;

Fig. 2A and Fig. 2B show another conventional LED illuminating device having a changeable correlated color temperature, wherein Fig. 2A shows an example of light emission of the LED illuminating device, and Fig. 2B shows a plane graph of a light emergent surface of a lens group in this example of light emission;

Fig. 3A to Fig. 3E show a lens according to one embodiment of the present invention, wherein Fig. 3A is a cross-sectional diagram of the lens, Fig. 3B is a lateral diagram of the lens as observed from a light incident side, Fig. 3C is a plane graph of the lens as observed from the light incident side, Fig. 3D is a cross-sectional diagram along line A-A as shown in Fig. 3C, and Fig. 3E is a lateral diagram of the lens.

Fig. 4 shows one example of design of a three-dimensional surface;

Fig. 5 shows an optical pathway diagram of the lens according to one embodiment of the present invention;

Fig. 6A and Fig. 6B show plane graphs of the light emergent surface of the lens according to one embodiment of the present invention, wherein Fig. 6A shows a situation in which two LEDs are both turned on, and Fig. 6B shows a situation in which only one LED is turned on;

Fig. 7 shows a lens array according to one embodiment of the present invention; and

Fig. 8A and Fig. 8B show an illuminating device according to one embodiment of the present invention, wherein Fig. 8A is a top view of the illuminating device, and Fig. 8B is a perspective view of the illuminating device.

**Detailed Description of the Embodiments**

Embodiments of the present invention will be described in detail in reference to the figures.

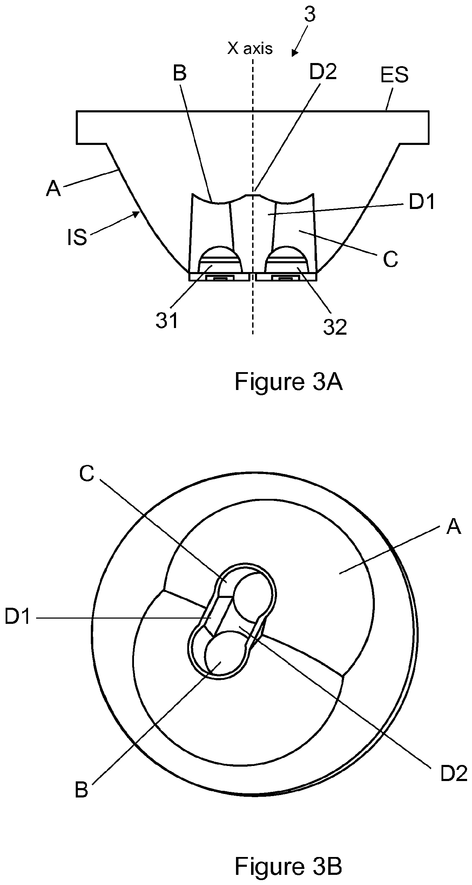

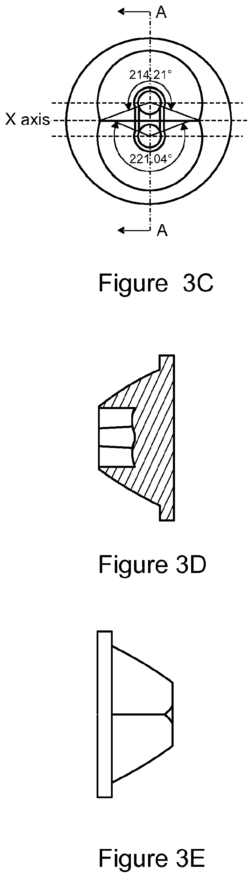

Fig. 3A to Fig. 3E show an example of a lens according to one embodiment of the present invention. For the sake of easy understanding, a first LED 31 and a second LED 32 are also shown in Fig. 3A. As shown in Fig. 3A and Fig. 3B, a lens 3 comprises a first surface IS and a second surface ES, wherein the first surface IS comprises light incident surfaces and total reflection surface. The light incident surfaces include surfaces B, surfaces C, surfaces D1 and surfaces D2, and the total reflection surface comprises surface A.

In the present example, the surface A comprises two partial conic surfaces assigned to the first LED 31 and the second LED 32 and partially enclosing one surface B assigned thereto, respectively. As shown in Fig. 3C, an angle of rotation of respective partial conic surface can be no less than 180°, for instance, 214.21° in the present example. In this situation, more light from the first LED 31 and the second LED 32 can be reflected by the surface A, thus, light extraction efficiency is improved.

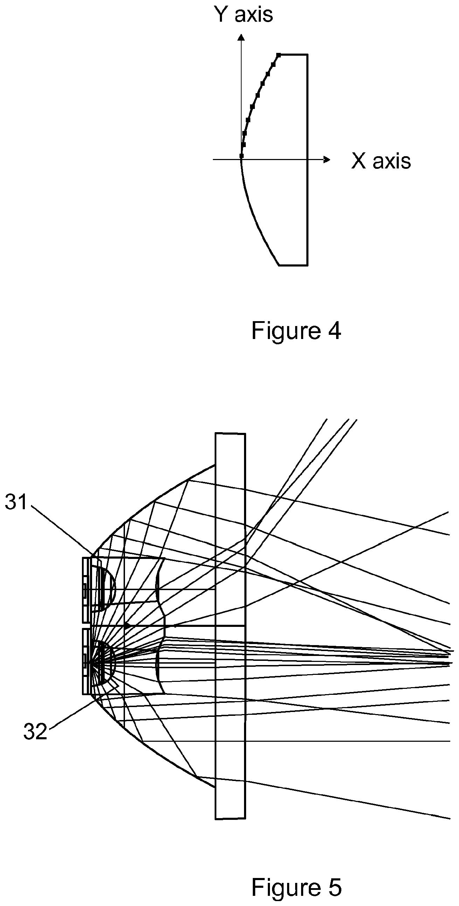

The surfaces B can include three-dimensional surfaces having various shapes such as convex-lens surface shape (protruding towards the side of the first LED 31 and the second LED 32), concave-lens surface shape (protruding towards the side of the second surface ES), Fresnel-lens surface shape, and each surface B corresponds to a different light source. In this example, the surfaces B are configured to include two convex-lens surfaces protruding towards the side of the LED 31 and the second LED 32, and the two convex-lens surfaces are assigned to the first LED 31 and the second LED 32, respectively. Fig. 4 shows a configuration example of the surfaces B, wherein firstly a two-dimensional curve 41 is obtained by fitting a two-dimensional array of data with a spline curve, and then a three-dimensional surface is obtained by rotating the two-dimensional curve 41 360° about X axis. That is, in this example, respective three-dimensional surface is a rotationally symmetric surface. Through the manner of rotating the spline curve, the surfaces B having desired optical properties can be conveniently configured to obtain expected light distribution. However, the present invention is not limited to this, and the three-dimensional surfaces can have a non-rotationally symmetric shape according to configuration requirements.

In a situation that the three-dimensional surfaces are rotationally symmetric surfaces, the first LED 31 and the second LED 32 each can be configured in such a manner that an optical axis thereof is coincident with respective rotation axis of symmetry of respective three-dimensional surface, as a result, light emitted from the first LED 31 and the second LED 32 can be further uniformized.

In the present example, the surface C comprises two partial cylindrical surfaces assigned to the first LED 31

4

and the second LED 32 and partially enclosing one surface B assigned thereto, respectively. As shown in Fig. 3C, an angle of rotation of respective partial cylindrical surface can be no less than 180°, for instance, 221.04° in the present example. In this situation, more light from the first LED 31 and the second LED 32 can be incident through the surface C, thus, the light extraction efficiency is improved.

Respective surface D1 joins two adjacent partial cylindrical surfaces of the plurality of partial cylindrical surfaces, and respective surface D2 joints two adjacent three-dimensional surfaces of the plurality of three-dimensional surfaces. Respective surface D1 and respective surface D2, for instance, can be plane surfaces; alternatively, they also can have patterns for improving light incident rate or light mixing rate.

In the situation that the surface C is formed by a plurality of partial cylindrical surfaces, respective axis of each of the plurality of cylindrical surfaces can form a predetermined angle with a central axis of the lens 3, and this predetermined angle, for instance, can be equal to or less than 5°. However, this predetermined angle may be more than 5° according to configuration requirements. Moreover, the axis of respective partial cylindrical surface at the side of the second surface ES is closer to the central axis of the lens 3 than at the side of the first surface IS. Thus, an opening area formed by the surfaces C and the surfaces D1 at the side of the first LED 31 and the second LED 32 is bigger than an opening area formed at the side of the surfaces B. In this situation, demoulding can be easier when the lens 3 is fabricated through injection molding, improving the yield.

In addition, according to configuration requirements, the surfaces C also can be configured as partial conic surfaces or surfaces having other desired shapes.

In reference to Fig. 3A and Fig. 3B, the surfaces B, the surfaces C, the surfaces D1 and the surfaces D2 form an accommodating chamber for accommodating the first LED 31 and the second LED 32, and the surface A forms a side surface of the lens 3. As a result, an illuminating device comprising the lens 3 can have a compact structure.

The second surface ES comprises a light emergent surface that can be, for instance, a plane surface, and also can be configured as a surface having other desired shape according to configuration requirements. The light emergent surface, for example, also can have patterns for improving light incident rate or light mixing rate.

In the present example, the second surface ES has a circular shape. However, the present invention is not limited to this, and the second surface ES, for instance, also can have a surface shape such as square shape, rectangular shape and hexagonal shape, in which case a lens array as mentioned later on can be formed by putting a plurality of the lens 3.

Fig. 5 shows an optical pathway diagram of the lens 3 according to one embodiment of the present invention. As shown in Fig. 5, light from the first LED 31 and the second LED 32 is incident on the lens 3 from the surfaces B, the surfaces C, the surfaces D1 and the surfaces D2. Specifically, light incident from the surfaces B and the surfaces D2 substantially directly emerges from the light emergent surface of the second surface ES, and light incident from the surfaces C and the surfaces D1 substantially is incident on the surface A and emerges from the light emergent surface of the second surface ES upon total reflection on the surface A.

As shown in Fig. 5, as the first LED 31 and the second LED 32 have a predetermined distance from the surfaces B, and both the first LED 31 and the second LED 32 have a predetermined light-emitting angle, a part of light emitted from the first LED 31 can enter the lens from a three-dimensional surface assigned thereto, and the other part of light emitted from the first LED 31 can enter the lens from a three-dimensional surface assigned to the second LED 32. Similarly, a part of light emitted from the second LED 32 can enter the lens from a three-dimensional surface assigned thereto, and the other part of light emitted from the second LED 32 can enter the lens from a three-dimensional surface assigned to the first LED 31.

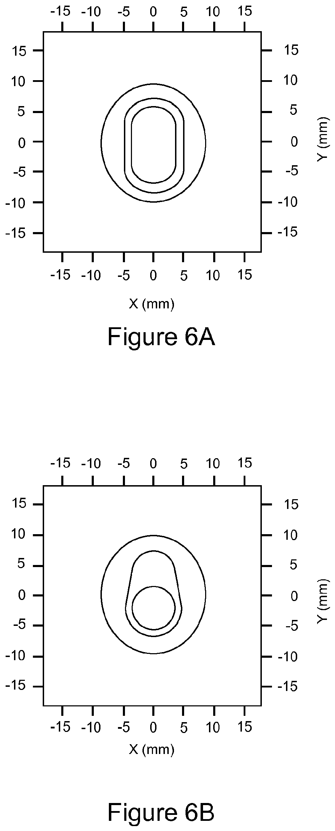

Fig. 6A and Fig. 6B show plane graphs of the light emergent surface of the lens 3 according to one embodiment of the present invention, wherein Fig. 6A shows a situation in which the first LED 31 and the second LED 32 are both turned on, and Fig. 6B shows a situation in which only the second LED 32 is turned on. As shown in feature 6B, since the other part of light emitted from the second LED 2 can enter the lens from the three-dimensional surface assigned to the first LED 31, a part of the light emergent surface assigned to the first LED 31 will not become dark and still keep a bright state. That is, substantially uniform light emission is obtained. In this situation, customers will not think that the first LED 31 that is actually turned off is broken.

In the present embodiment, since corresponding three-dimensional surfaces are provided for the first LED 31 and the second LED 32, respectively, with respect to the LED illuminating device 1 as shown in Fig. 1, a volume of an illuminating device formed by the lens 3 according to the present embodiment can be reduced.

In reference to Fig. 3A, in the present embodiment, the first surface IS has a mirror-symmetric structure with respect to X axis, and the first surface has a nonaxisymmetric structure. Similarly, in a situation that the lens 3 has three, four or more three-dimensional surfaces, the first surface IS can have a mirror-symmetric structure with respect to X axis, moreover, the first surface can have a nonaxisymmetric structure.

Further, in the present embodiment, the first surface IS has a rotationally symmetric structure of 180° with respect to the X axis. Similarly, in a situation that the lens 3 has three, four...N (N is a natural number greater than 3) three-dimensional surfaces, the first surface IS can have a rotationally symmetric structure of 120°, 90°...360/N°, respectively, with respect to the X axis.

Preferably, the lens 3 according to the embodiments of the present invention only comprises two, three or four three-dimensional surfaces. In this situation, uniform light mixture can be obtained, and the structure of the lens 3 can be more compact, giving more prominence to the advantageous of the present invention.

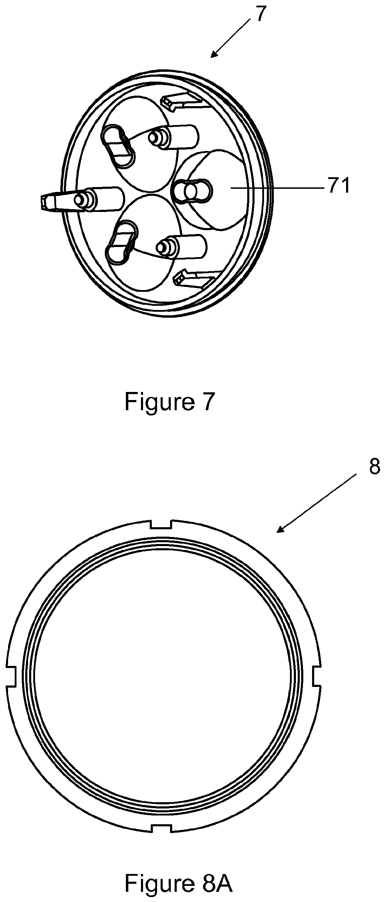

Fig. 7 shows an example of a lens array according to another embodiment of the present invention. As shown in Fig. 7, a lens array 7 comprises three lenses 3 as mentioned above, but the present invention is not limited to this, and the lens array 7 may comprise two, four or more lenses 3 as mentioned above.

The lens array 7 can be made integrally, and also can be formed by a plurality of lenses 3.

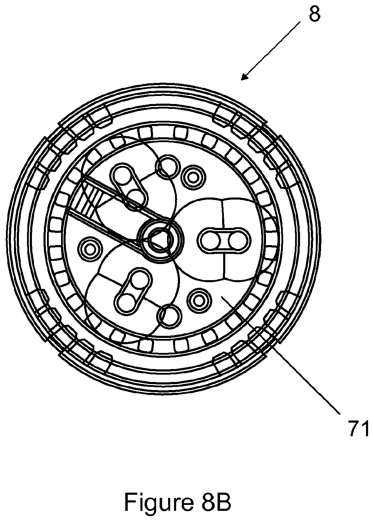

Fig. 8A and Fig. 8B show an example of an illuminating device according to another embodiment of the present invention, wherein Fig. 8A is a top view of the illuminating device, and Fig. 8B is a perspective view of the illuminating device. As shown in Fig. 8A and Fig. 8B, an illuminating device 8 comprises lens arrays 7 and a plurality of light sources (not shown) assigned to the lens arrays 7. Alternatively, the illuminating device 8 also can comprise a plurality of independent lenses 3.

The light sources of the illuminating device 8, for instance, can be LEDs. A plurality of LEDs can have different color temperatures and can emit light of different colors. Moreover, luminance of one or more of the plurality of LEDs can be independently controlled by, for example, changing current supplied to each LED. Thus, the illuminating device 8 can be configured as an illuminating device having changeable correlated color temperature.

Due to provision of the lens 3 or the lens array 7 according to embodiments of the present invention, the illuminating device 8 has a compact structure and can uniformly emit light compared with the illuminating device 1 as shown in Fig. 1 and the illuminating device 2 as shown in Fig. 2.

Although specific embodiments have been illustrated and described herein, it will be appreciated by those of ordinary skill in the art that a variety of optional and/or equivalent implementations may be substituted for the specific embodiments shown and described without departing from the scope of the present invention. This application is intended to cover any adaptations or variations of the specific embodiments discussed herein. Therefore, it is intended that this invention be limited only by the claims and the equivalents thereof.

List of reference signs

| | |
|---|---|
| 1, 2 | LED illuminating device |
| 11, 12, 21, 22, 31, 32 | LED |
| 13 ,3 | lens |
| 23 | lens group |
| 7 | lens array |
| 8 | illuminating device |

**Claims**

1. A lens (3), comprising a first surface (IS) and a second surface (ES), wherein the first surface (IS) comprises:

   light incident surfaces (B, C, D1, D2), from which light enters the lens (3); and
   a total reflection surface (A), on which a part of light entering the lens (3) is totally reflected, the second surface (ES) comprises a light emergent surface,
   wherein the light incident surfaces (B, C, D1, D2) comprise a plurality of three-dimensional surfaces assigned to different light sources (31, 32), a part of light from one light source (31 or 32) enters the lens (3) from one three-dimensional surface assigned to the one light source (31 or 32), and the other part enters the lens from one three-dimensional surface that is not assigned to the one light source (31 or 32), **characterized in that** the light incident surfaces (B, C, D1, D2) further comprise: a plurality of partial cylindrical surfaces (C) each partially enclosing one three-dimensional surface assigned thereto; first joining surfaces (D1) joining the plurality of partial cylindrical surfaces; and second joining surfaces (D2) joining the plurality of three-dimensional surfaces.

2. The lens according to Claim 1, wherein the first surface (IS) has a mirror-symmetric structure.

3. The lens according to Claim 1, wherein each three-dimensional surface of the plurality of three-dimensional surfaces is a rotationally symmetric surface.

**4.** The lens according to Claim 3, wherein a rotation axis of symmetry of a respective three-dimensional surface is coincident with an optical axis of a light source (31, 32) assigned to the three-dimensional surface.

**5.** The lens according to any of Claims 1-4, wherein the light incident surfaces (B, C, D1, D2) comprise two, three or four of the three-dimensional surfaces.

**6.** The lens according to Claim 1, wherein an angle of rotation of a respective partial cylindrical surface (C) is no less than 180°.

**7.** The lens according to Claim 1-4, wherein an axis of a respective partial cylindrical surface (C) and a central axis of the lens (3) form a predetermined angle and the axis of the respective partial cylindrical surface (C) at the side of the second surface is closer to the central axis of the lens than at the side of the first surface (IS).

**8.** The lens according to Claim 7, wherein the predetermined angle is equal to or less than 5°.

**9.** The lens according to any of Claims 1-4, wherein the total reflection surface (A) comprises a plurality of partial conic surfaces each partially enclosing one three-dimensional surface assigned thereto.

**10.** The lens according to Claim 9, wherein an angle of rotation of a respective partial conic surface is no less than 180°.

**11.** The lens according to any of Claims 1-4, wherein the light incident surfaces (B, C, D1, D2) form a light-source accommodating chamber and the total reflection surface (A) forms a side surface of the lens.

**12.** A lens array comprising a plurality of the lenses (3) according to any of Claims 1-11.

**13.** An illuminating device comprising the lens according to any of Claims 1-11 or the lens array according to Claim 12, and a plurality of light sources, a plurality of three-dimensional surfaces of the lens assigned to different light sources.

**14.** The illuminating device according to Claim 13, wherein luminance of at least part of the plurality of light sources is controllable independently.

**15.** The illuminating device according to Claim 13 or 14, wherein the plurality of light sources comprise a plurality of LEDs having light of different colors.

**Patentansprüche**

**1.** Linse (3), die eine erste Fläche (IS) und eine zweite Fläche (ES) umfasst, wobei die erste Fläche (IS) umfasst:

Lichteinfallflächen (B, C, D1, D2), von denen Licht in die Linse (3) eintritt; und
eine Totalreflexionsfläche (A), auf der ein Teil des Lichts, das in die Linse (3) eintritt, einer Totalreflexion unterzogen wird, wobei die zweite Fläche (ES) eine Lichtaustrittsfläche umfasst,
wobei die Lichteinfallflächen (B, C, D1, D2) eine Vielzahl von dreidimensionalen Flächen umfassen, die unterschiedlichen Lichtquellen (31, 32) zugeordnet sind, ein Teil des Lichts aus einer Lichtquelle (31 oder 32) von einer dreidimensionalen Fläche, die der einen Lichtquelle (31 oder 32) zugeordnet ist, in die Linse (3) eintritt und der andere Teil von der dreidimensionalen Fläche, die nicht der einen Lichtquelle (31 oder 32) zugeordnet ist, in die Linse eintritt,
**dadurch gekennzeichnet, dass**
die Lichteinfallflächen (B, C, D1, D2) ferner umfassen: eine Vielzahl von teilzylindrischen Flächen (C), von denen jede eine dreidimensionale Fläche, die dieser zugeordnet ist, teilweise umschließt; erste Zusammenfügeflächen (D1), die die Vielzahl von teilzylindrischen Flächen zusammenfügen; und zweite Zusammenfügeflächen (D2), die die Vielzahl von dreidimensionalen Flächen zusammenfügen.

**2.** Linse nach Anspruch 1, wobei die erste Fläche (IS) eine spiegelsymmetrische Struktur aufweist.

**3.** Linse nach Anspruch 1, wobei jede dreidimensionale Fläche der Vielzahl von dreidimensionalen Flächen eine rotationssymmetrische Fläche ist.

**4.** Linse nach Anspruch 3, wobei eine Rotationssymmetrieachse einer jeweiligen dreidimensionalen Fläche mit einer optischen Achse einer Lichtquelle (31, 32), die der dreidimensionalen Fläche zugeordnet ist, zusammenfällt.

**5.** Linse nach einem der Ansprüche 1-4, wobei die Lichteinfallflächen (B, C, D1, D2) zwei, drei oder vier der dreidimensionale Flächen umfassen.

**6.** Linse nach Anspruch 1, wobei ein Drehwinkel einer jeweiligen teilzylindrischen Fläche (C) nicht kleiner als 180° ist.

**7.** Linse nach Anspruch 1-4, wobei ein Achse einer jeweiligen teilzylindrischen Fläche (C) und eine Mittelachse der Linse (3) einen vorbestimmten Winkel bilden und die Achse der jeweiligen teilzylindrischen Fläche (C) auf der Seite der zweiten Fläche näher an der Mittelachse der Linse liegt als auf der Seite der ersten Fläche (IS).

**8.** Linse nach Anspruch 7, wobei der vorbestimmte Winkel gleich oder kleiner als 5° ist.

**9.** Linse nach einem der Ansprüche 1-4, wobei die Totalreflexionsfläche (A) eine Vielzahl von teilkonischen Flächen umfasst, von denen jede eine dreidimensionale Fläche, die dieser zugeordnet ist, teilweise umschließt.

**10.** Linse nach Anspruch 9, wobei ein Drehwinkel einer jeweiligen teilkonischen Fläche nicht kleiner als 180° ist.

**11.** Linse nach einem der Ansprüche 1-4, wobei die Lichteinfallflächen (B, C, D1, D2) eine Lichtquellen-Aufnahmekammer bilden und die Totalreflexionsfläche (A) eine Seitenfläche der Linse bildet.

**12.** Linsenanordnung, die eine Vielzahl der Linsen (3) nach einem der Ansprüche 1-11 umfasst.

**13.** Beleuchtungsvorrichtung, die die Linse nach einem der Ansprüche 1-11 oder die Linsenanordnung nach Anspruch 12 und eine Vielzahl von Lichtquellen, eine Vielzahl von dreidimensionalen Flächen der Linse, die unterschiedlichen Lichtquellen zugeordnet sind, umfasst.

**14.** Beleuchtungsvorrichtung nach Anspruch 13, wobei die Leuchtstärke zumindest eines Teils der Vielzahl von Lichtquellen unabhängig steuerbar ist.

**15.** Beleuchtungsvorrichtung nach Anspruch 13 oder 14, wobei die Vielzahl von Lichtquellen eine Vielzahl von LEDs umfasst, die Licht von unterschiedlichen Farben aufweisen.

**Revendications**

**1.** Lentille (3), comprenant une première surface (IS) et une seconde surface (ES), dans laquelle la première surface (IS) comprend :

des surfaces d'incidence de lumière (B, C, D1, D2), à partir desquelles de la lumière entre dans la lentille (3) ; et une surface de réflexion totale (A), sur laquelle une partie de lumière entrant dans la lentille (3) est totalement réfléchie, la seconde surface (ES) comprend une surface d'émergence de lumière,
dans laquelle les surfaces d'incidence de lumière (B, C, D1, D2) comprennent une pluralité de surfaces tridimensionnelles attribuées à différentes sources de lumière (31, 32), une partie de la lumière provenant d'une première source de lumière (31 ou 32) entre dans la lentille (3) à partir d'une première surface tridimensionnelle attribuée à la première source de lumière (31 ou 32), et l'autre partie entre dans la lentille à partir de la première surface tridimensionnelle qui n'est pas attribuée à la première source de lumière (31 ou 32), **caractérisée en ce que** les surfaces d'incidence de lumière (B, C, D1, D2) comprennent en outre : une pluralité de surfaces cylindriques partielles (C) renfermant chacune partiellement une première surface tridimensionnelle lui étant attribuée ; des premières surfaces de liaison (D1) reliant la pluralité de surfaces cylindriques partielles ; et des secondes surfaces de liaison (D2) reliant la pluralité de surfaces tridimensionnelles.

**2.** Lentille selon la revendication 1, dans laquelle la première surface (IS) comporte une structure symétrique en miroir.

**3.** Lentille selon la revendication 1, dans laquelle chaque surface tridimensionnelle de la pluralité de surfaces tridimensionnelles est une surface symétrique en rotation.

**4.** Lentille selon la revendication 3, dans laquelle un axe de symétrie de rotation d'une surface tridimensionnelle respective est co-incidente avec un axe optique d'une source de lumière (31, 32) attribuée à la surface tridimensionnelle.

**5.** Lentille selon l'une quelconque des revendications 1-4, dans laquelle les surfaces d'incidence de lumière (B, C, D1, D2) comprennent deux, trois ou quatre des surfaces tridimensionnelles.

**6.** Lentille selon la revendication 1, dans laquelle un angle de rotation d'une surface cylindrique partielle respective (C) ne fait pas moins de 180°.

**7.** Lentille selon l'une quelconque des revendications 1-4, dans laquelle un axe d'une surface cylindrique partielle respective (C) et un axe central de la lentille (3) forment un angle prédéterminé et l'axe de la surface cylindrique partielle respective (C) au niveau du côté de la seconde surface est plus proche de l'axe central de la lentille qu'au niveau du côté de la première surface (IS).

**8.** Lentille selon la revendication 7, dans laquelle l'angle prédéterminé est égal ou inférieur à 5°.

**9.** Lentille selon l'une quelconque des revendications 1-4, dans laquelle la surface de réflexion totale (A) comprend une pluralité de surfaces coniques partielles renfermant chacune partiellement une surface tridimensionnelle lui étant attribuée.

**10.** Lentille selon la revendication 9, dans laquelle un angle de rotation d'une surface conique partielle respective ne fait pas moins de 180°.

**11.** Lentille selon l'une quelconque des revendications 1-4, dans laquelle les surfaces d'incidence de lumière (B, C, D1, D2) forment une chambre d'accueil de source de lumière et la surface de réflexion totale (A) forme une surface latérale de la lentille.

**12.** Matrice de lentilles comprenant une pluralité des lentilles (3) selon l'une quelconque des revendications 1-11.

**13.** Dispositif d'éclairage comprenant la lentille selon l'une quelconque des revendications 1-11 ou la matrice de lentilles selon la revendication 12, et une pluralité de sources de lumière, une pluralité de surfaces tridimensionnelles de la lentille attribuées à différentes sources de lumière.

**14.** Dispositif d'éclairage selon la revendication 13, dans lequel la luminance d'au moins une partie de la pluralité de sources de lumière peut être commandée indépendamment.

**15.** Dispositif d'éclairage selon la revendication 13 ou 14, dans lequel la pluralité de sources de lumière comprennent une pluralité de DEL ayant de la lumière de différentes couleurs.

Figure 1

21

22

2

22

21  23

22

**Figure 2A**

DA

BR

BR

**Figure 2B**

Figure 3A

Figure 3B

Figure 3C

Figure 3D

Figure 3E

Figure 4

Figure 5

Figure 6A

Figure 6B

7

71

Figure 7

8

Figure 8A

Figure 8B

**EP 2 875 395 B1**

**Patent documents cited in the description**

- US 20100226127 A1